# EUROPÄISCHE PATENTSCHRIFT

(11) **EP 2 832 628 B1**
(45) Veröffentlichungstag und Bekanntmachung des Hinweises auf die Patenterteilung: **05.05.2021**
(21) Anmeldenummer: 14177680.7
(22) Anmeldetag: 18.07.2014
(51) Int. Cl.: B62H 3/00, B61D 37/00, B61D 45/00

(54) **Innenausstattungsgegenstand zur Anordnung in Fahrzeugen des öffentlichen Verkehrs**
Furnishing for assembly in public transport vehicles
Objet d'équipement intérieur destiné à l'agencement dans des véhicules de transport public

(30) Priorität: 31.07.2013 DE 102013215063
(43) Veröffentlichungstag der Anmeldung: 04.02.2015
(73) Patentinhaber: Bombardier Transportation GmbH, 10785 Berlin (DE)
(72) Erfinder: Wronski, Philipp, 13469 Berlin (DE); Michel, Nicole, 14469 Potsdam (DE); Caspari, Marco, 14621 Schönwalde-Glien OT Pausin (DE)
(74) Vertreter: Patentanwälte Bressel und Partner mbB

(56) Entgegenhaltungen:
- DE-A1- 3 320 369
- DE-A1- 19 539 787
- DE-A1- 19 636 486
- DE-A1-102009 056 573
- DE-A1-102011 012 903
- DE-U1- 20 217 206
- DE-U1-202006 012 354
- DE-U1-202009 006 497
- DE-U1-202009 014 975
- KR-U- 20110 006 213
- KR-U- 20110 006 214

## Beschreibung

Die Erfindung betrifft ein Fahrzeug des öffentlichen Verkehrs, insbesondere des öffentlichen Nahverkehrs, mit einem Innenausstattungsgegenstand. Die Erfindung betrifft insbesondere ein Schienenfahrzeug oder einen Bus mit dem Innenausstattungsgegenstand.

Für Zweiräder wie Fahrräder existieren in den öffentlichen Verkehrsmitteln meist nur unzureichende Befestigungs- und Haltevorrichtungen. Die in den Fahrzeugen der öffentlichen Verkehrssysteme vorhandenen vertikalen Haltestangen werden in der Praxis bislang lediglich zum Festhalten der Fahrgäste benutzt und nicht für eine zusätzliche Halterung von Zweirädern. Derartige Haltestangen werden in Fahrzeugen des öffentlichen Nahverkehrs, vor allem in Bussen, Straßen-, S- und U-Bahnen, Regional- und Fernbahnen eingesetzt. Die Erfindung betrifft jedoch auch die Befestigung von Fahrrädern in Schiffen und Booten.

KR 2011 0006214 U beschreibt einen Fahrradhalter zum Halten einer Mehrzahl von Fahrrädern Seite an Seite an der Innenwand eines Schienenfahrzeugwagens.

DE 195 39 787 A1 beschreibt ein Schienenfahrzeug, insbesondere für den Nah- und Regionalverkehr, das für die Unterbringung von Fahrrädern und sperrigen Gegenständen, wie z. B. Freizeitgeräten, eingerichtet ist.

Im Stand der Technik werden aber bereits Haltestangen beschrieben, die neben der Haltefunktion für Personen auch über Mittel zur Halterung von Fahrrädern verfügen. In der DE 101 07 897 B4 wird beispielsweise eine Haltevorrichtung offenbart, die entlang einer senkrechten Haltestange frei verschiebbar angeordnet ist. Dabei wird eine Klemmvorrichtung zur Aufnahme eines Fahrradlenkers auf einer senkrechten Haltestange passgenau geführt. Die Klemmvorrichtung bildet mit der Haltestange eine sich nach unten erweiternde konische Öffnung, welche den Lenker des Fahrrades quer zur Ausrichtung der Haltestange fixiert. Das derart fixierte Fahrrad wird dabei zwischen der Haltestange und der Haltevorrichtung arretiert. Nachteilig bei diesem System ist, dass die Oberfläche der Haltestange und auch des Fahrrades bei einer fortwährenden Benutzung der Haltevorrichtung mechanisch stark beansprucht wird und deshalb einem erhöhten Verschleiß ausgesetzt ist.

In der DE 20 2004 013092 U1 wird eine ähnliche mit einer Haltstange korrespondierende Haltevorrichtung für Fahrräder offenbart. Die Verbindung der Haltevorrichtung mit der Haltestange erfolgt hier über eine hohlzylindrische Querschnittsöffnung, die mit dem Querschnitt der Haltestange passgenau korrespondiert. Die Haltevorrichtung, die verschiebbar mit der Haltstange verbunden ist, weist dabei eine nach oben offene konische Ausweitung auf, welche den Lenker des Fahrrades quer zur Ausrichtung der Haltestange arretiert.

Nachteilig bei den oben beschriebenen Haltevorrichtungen ist der relativ komplizierte und fertigungstechnisch aufwändige Aufbau sowie die wegen der zueinander beweglichen Komponenten bestehende Verschleißanfälligkeit. Aufgrund der Verschiebbarkeit der Haltevorrichtungen kann sich das Fahrrad während der Fahrt des Schienenfahrzeugs lösen. Zudem besteht eine Verletzungsgefahr für die Fahrgäste, die sich zwischen Haltevorrichtung und Haltestange bzw. Haltestange und Fahrrad klemmen können.

Ausgehend von diesem Stand der Technik ist die Aufgabe der vorliegenden Erfindung, ein Fahrzeug des öffentlichen Verkehrs mit einem Innenausstattungsgegenstand zur Verfügung zu stellen, der einfach aufgebaut ist und dennoch eine sichere Fixierung von Zweirädern ermöglicht. Die Klemmgefahr für Personen soll reduziert werden.

Diese Aufgabe wird durch ein Fahrzeug mit den Merkmalen des Anspruchs 1 gelöst.

Ein Vorteil des erfindungsgemäßen Fahrzeugs mit einem Innenausstattungsgegenstand besteht in der einfachen und besonders platzsparenden Halterung für ein oder mehrere Fahrräder. Da sich die Pedale von Fahrrädern in geringerer Höhe befinden als Lenker und üblicherweise von Personen nicht angefasst werden, ist die Klemmgefahr reduziert. Insbesondere benötigt die Pedalaufnahme auch keine beweglichen Teile und reduziert auch daher die Klemmgefahr. Vorteilhafte Weiterbildungen der Erfindung ergeben sich aus den Merkmalen der zugehörigen Unteransprüche.

Demnach beinhaltet die Erfindung insbesondere ein Fahrzeug des öffentlichen Nahverkehrs mit einem Innenausstattungsgegenstand, welcher mit einer Pedalaufnahme für wenigstens ein Fahrradpedal versehen ist.

Gemäß einer vorteilhaften Ausführungsform ist der Innenausstattungsgegenstand als eine in Fahrzeugen des öffentlichen Nahverkehrs vorgesehene Haltestange ausgebildet, wobei die Pedalaufnahme durch einen Halterabschnitt gebildet wird, der eine Öffnung aufweist, welche insbesondere durch im Wesentlichen parallel zueinander verlaufende Haltestangenabschnitte begrenzt wird. Vorteilhaft ist dabei vorgesehen, dass die Pedalaufnahme an ihrem unteren und/oder oberen Ende von einer Aufgabelung der Haltestange begrenzt ist. Insbesondere wird die Öffnung durch zwei Haltestangenabschnitte begrenzt und damit gebildet. Die beiden Haltestangenabschnitte können parallel zueinander verlaufen. Insbesondere erstrecken sich die beiden Haltestangenabschnitte über dieselbe Höhendifferenz, sodass die Öffnung sich ebenfalls über diese Höhendifferenz erstreckt. Die beiden Haltestangenabschnitte verlaufen in einem Abstand zueinander, sodass die Öffnung gebildet ist. Grundsätzlich ist es auch möglich, dass die Haltestange mehr als zwei sich über dieselbe Höhendifferenz erstreckende Haltestangenabschnitte aufweist, die jeweils paarweise zueinander beabstandet sind. Dadurch wird zumindest eine Öffnung gebildet, die wiederum eine Pedalaufnahme darstellt.

Die den Halterabschnitt beidseitig begrenzenden Haltestangenabschnitte haben somit die Funktion einer Haltestange und sie bilden zugleich den tragenden Rahmen eines Fahrradhalters. Diese Integration mehrerer Funktionen in die Haltestange ermöglicht einen besonders platzsparenden und zugleich stabilen Aufbau der Fahrradhalterung. Der Halterabschnitt erstreckt sich vorzugsweise nur über einen Teil der Haltestange. Die Pedalaufnahme ist dabei vorteilhaft in einer für Fahrradpedale üblichen Höhe angeordnet. Die Höhe eines Fahrradpedals kann durch Verdrehen der Tretkurbel eingestellt werden, um bei unterschiedlich großen Fahrrädern eine sichere Fixierung des Pedals in dem Halterabschnitt zu gewährleisten. Idealerweise ist der Halterabschnitt jedoch derart ausgestaltet, dass Fahrradpedale von Fahrrädern sämtlicher handelsüblicher Rahmengrößen in einer oberen Stellung bzw. der OT-Stellung der Tretkurbel in den Halterabschnitt eingeführt werden können, da in einer oberen Stellung das durch das Eigengewicht des Fahrrades auf das fixierte Pedal wirkende Moment gegenüber einer unteren Stellung vorteilhaft verringert ist. In einer weiteren bevorzugten Ausgestaltung der Haltestange kann die Pedalaufnahme auch höher als in einer für Fahrradpedale üblichen Höhe angeordnet sein. Somit kann das in den Fahrradhalter eingesetzte Fahrrad wenigstens einseitig angehoben sein und es ist sichergestellt, dass die Gewichtskraft ein Herausgleiten aus dem Fahrradhalter verhindert.

Vorzugsweise erstreckt sich der Halterabschnitt über ein Fünftel, ein Drittel oder die Hälfte der Gesamtlänge einer senkrecht im Fahrzeug montierten Haltestange. Um die Auflagefläche für ein angelehntes Fahrrad zu vergrößern und eine stabile Arretierung des Fahrrades zu erleichtern, erstreckt sich der Halterabschnitt bevorzugt über die Höhe des Oberrohrs eines handelsüblichen Fahrrades hinaus. Beispielsweise können sich die Haltestangenabschnitte der Haltestange im Bereich des Halterabschnitts gemäß der Rahmenhöhe eines 28"-Fahrrades bis zu einer Höhe von 53, 56 oder 60 cm erstrecken. Bevorzugt erstrecken sich die zueinander beabstandeten Stangenabschnitte bis zu einer Höhe von etwa 60 oder 80 cm.

Fahrradpedale weisen in der Regel einen drehbar auf einer Pedalachse gelagerten Pedalkörper und einen Pedalzapfen auf, der die Pedalachse mir der Tretkurbel verbindet. Gemäß Anspruch 1 ist an einer Haltestange eine Pedalaufnahme ausgebildet, die einen Schlitz zur Aufnahme des Pedalzapfens eines Fahrradpedals aufweist. Der Schlitz kann mit einer Einführöffnung versehen sein, die sich in Längsrichtung des Schlitzes verjüngt bzw. mit in Längsrichtung des Schlitzes verlaufenden Schrägen versehen ist, um das Einsetzen des Pedalzapfens zu erleichtern. Insbesondere können die Pedalaufnahme umgrenzende Haltestangenabschnitte als Führung für das Pedal dienen, um dieses in Richtung des als Aufnahme für den Pedalzapfen dienenden Schlitzes zu führen. Vorteilhaft weist eine Mündung des Schlitzes nach oben, z.B. senkrecht nach oben. Der obere Abschnitt des Schlitzes kann zur Aufnahme von Pedalzapfen von Fahrrädern mit hoher Pedalhöhe ausgestaltet sein und der untere Abschnitt des Schlitzes zur Aufnahme von Pedalzapfen von Fahrrädern mit niedriger Pedalhöhe. Zwar nicht unter den Gegenstand der Ansprüche fallend kann ein Schlitz mit den zuvor genannten Merkmalen alternativ an einem anderen Innenausstattungsgegenstand als einer Haltestange vorgesehen sein. Darauf wird noch eingegangen.

Nach einer weiteren Variante der Erfindung ist vorgesehen, dass die Pedalaufnahme innerhalb des Halterabschnitts zumindest ein federnd gelagertes Element oder aus einem elastischen Material geformtes Element aufweist. Alternativ oder zusätzlich weist die Pedalaufnahme innerhalb des Halterabschnitts zumindest ein federnd verschiebbares, über zumindest ein Federelement gehaltenes und/oder elastisch nachgebendes, klemmend wirkendes Halteelement auf. In all diesen Fällen hält das Element den Pedalkörper und/oder Pedalzapfen eines Fahrradpedals bei aufgenommenem, insbesondere in den Halterabschnitt eingeführtem Fahrradpedal, klemmend. Insbesondere wird durch Einführung des Pedals in die Pedalaufnahme das zumindest eine Halteelement ausgelenkt und/oder elastisch verformt, sodass eine entsprechende Rückstellkraft auf das Pedal ausgeübt wird. Insbesondere weist das Element, z. B. das Halteelement, zumindest ein Gummiprofil oder federnd eingespanntes Metall- oder Kunststoffprofilteil auf, das auf einer Innenseite angeordnet ist oder die auf sich gegenüberliegenden Seiten der Pedalaufnahme angeordnet sind. Vorteilhaft bestehen die Halteelemente aus sich innerhalb des Halterabschnitts horizontal gegenüberliegenden Elementen aus elastischem Material, z.B. Gummielementen, Gummiprofilen oder über Federelemente gehaltenen Metall- oder Kunststoffprofilteilen. Nach einer anderen vorteilhaften Ausführung ist vorgesehen, dass das Element oder die Elemente eine Vielzahl einzelner elastischer und/oder federnder Elemente aufweist, die z. B. aus Gummiteilen oder Metall- oder Kunststofffedern bestehen, wobei die Vielzahl der Elemente innerhalb des Halterabschnitts sich vertikal oder horizontal gegenüberliegend angeordnet sind.

Gemäß weiteren vorteilhaften Ausgestaltungen der Erfindung ist vorgesehen, dass die Haltestange an ihren Enden mit dem Dach und/oder dem Boden, mit mindestens einer Seitenwand und dem Dach, oder mit dem Boden und mindestens einer Seitenwand des Fahrzeuges, oder nur mit mindestens einer Seitenwand des Fahrzeuges verbunden ist. Dadurch ergeben sich zahlreiche Gestaltungsmöglichkeiten bei der Anordnung einer derartigen Haltestange in einem Fahrzeug des öffentlichen Nahverkehrs, die je nach Platzverhältnissen platzsparend variiert werden können.

Nach einer vorteilhaften Ausgestaltung kann vorgesehen sein, dass sich die Haltestange im unteren, dem Boden oder einer Seitenwand des Fahrzeuges zugerichteten Bereich aufgabelt und unter Ausbildung eines mit einer Öffnung versehenen Abschnitts nach oben in Richtung der Fahrzeugdecke oder in Richtung einer Seitenwand in Form zweier, insbesondere paralleler Stangen weiter verläuft, d.h. die zwei Stangen verlaufen voneinander beabstandet. Gemäß einer weiteren Ausführungsform ist es auch möglich, dass sich die Haltestange im unteren, dem Boden oder einer Seitenwand des Fahrzeuges zugerichteten Bereich aufgabelt und nach Ausbildung eines Halterabschnitts wieder zu einer Haltestange in Richtung Fahrzeugdecke oder Seitenwand zusammen läuft. Betrachtet man den Verlauf der Haltestange aus Richtung der Fahrzeugdecke oder von oben ausgehend von der Seitenwand, kann der Bereich des Zusammenlaufens ebenfalls als Gabelung bezeichnet werden. Neben den beiden zuvor genannten Möglichkeiten, bei denen eine untere Gabelung vorhanden ist, von der aus sich zumindest zwei in einem Abstand zueinander verlaufende Stangenabschnitte nach oben erstrecken (insbesondere senkrecht nach oben erstrecken), gibt es auch die Möglichkeit, dass lediglich eine obere Gabelung vorhanden ist, von der aus sich zumindest zwei in einem Abstand zueinander nach unten verlaufende Stangenabschnitte die Öffnung für die Pedalaufnahme bilden. Insbesondere in dem zuletzt genannten Fall kann sich zwischen den beiden in einem Abstand zueinander verlaufenden Stangenabschnitten ein Halteelement befinden, das den Pedalhalter bildet und z.B. den oben erwähnten Schlitz aufweist.

Zur Führung und/oder Sicherung des Pedalkörpers eines Fahrradpedals kann die Haltestange und/oder die Pedalaufnahme vorteilhaft mit Führungselementen versehen sein, an welchen der Pedalkörper bei in den Halterabschnitt eingeführtem Pedal verdrehsicher anliegt. Die Haltestange kann zumindest abschnittsweise eine Oberfläche aus einem elastischen und/oder nichtmetallischen, weichen Material aufweisen, sodass anstoßende Teile des Zweirades und die Haltestange nicht beschädigt werden.

Insbesondere kann die Haltestange ein tragendes Teil z.B. aus Metall aufweisen, das die Öffnung zur Aufnahme des Pedals ausbildet, und zusätzlich eine Abdeckung aus dem elastischen und/oder weichen Material aufweisen, das zumindest einen Abschnitt des tragenden Abschnitts abdeckt. Z.B. können zwei solcher Abdeckungen vorgesehen sein, wobei der tragende Abschnitt zwischen den zwei Abdeckungen aufgenommen ist. Auf diese Weise ist der tragende Abschnitt auf zwei einander gegenüberliegenden Seiten von einem elastischen und/oder weichen Material abgedeckt. Insbesondere kann diese Anordnung sandwichartig aufgebaut sein, d.h. die beiden Abdeckungen und der tragende Abschnitt sind jeweils schichtartig. Es ist jedoch auch möglich, dass der tragende Abschnitt rohrförmig ist. Auch in diesem Fall kann zumindest eine an die Außenoberfläche des Rohres angepasste Abdeckung aus dem elastischen und/oder weichen Material vorhanden sein.

Gemäß einer weiteren Ausführung eines Fahrradhalters weist dieser eine Pedalaufnahme auf, die wiederum vorzugsweise einen formschlüssig und/oder kraftschlüssig wirkenden Pedalhalter, insbesondere Pedalzapfenhalter, aufweist. Die Pedalaufnahme wird nicht durch eine Haltestange gebildet, ist aber mit zumindest einer Haltestange und damit mit einem Innenausstattungsgegenstand eines Fahrzeugs des öffentlichen Verkehrs verbunden. Die Pedalaufnahme kann insbesondere den oben genannten Schlitz zur Aufnahme eines Pedalzapfens aufweisen. Bei dieser Ausführung, aber auch bei anderen Ausführungen mit dem Schlitz, kann der Schlitz in einem Blech oder in einer Platte (z.B. einer Kunststoffplatte) ausgebildet sein.

Generell, nicht nur in Bezug auf einen Schlitz als Pedalzapfenaufnahme, wird es bevorzugt, dass der Pedalhalter einen Aufnahmeraum zum Aufnehmen des Pedals, insbesondere des Pedalzapfens, aufweist, wobei die Aufnahme oben offen ist, um das Pedal in die Aufnahme einbringen zu können. Vorzugsweise ist die Aufnahme an einander gegenüberliegenden Seiten durch von oben nach unten verlaufende Teile berandet. Insbesondere kann die Aufnahme unten geschlossen sein. Eine derartige Aufnahme definiert demzufolge eine Halteposition, in der das Pedal gehalten werden kann, wobei die Halteposition sich unterhalb der Einführöffnung der Aufnahme befindet.

Obwohl nicht im Schutzbereich der Ansprüche liegend, kann der Innenausstattungsgegenstand als Fahrzeugwand, z.B. Fahrzeugseitenwand, ausgebildet sein, wobei die Pedalaufnahme eine Pedalzapfenhalterung (zum Beispiel mit einem Schlitz zur insbesondere formschlüssigen Aufnahme des Pedalzapfens des Fahrradpedals) aufweist. Zum Beispiel ist die Pedalaufnahme zwischen zwei an der Fahrzeugwand (zum Beispiel nebeneinander) angeordneten Klappsitzen befestigt. Dabei ist die Pedalzapfenhalterung vorzugsweise über einen Träger mit der Fahrzeugwand verbunden. Vorteilhaft ist dabei wie bei den oben beschriebenen Ausführungsformen vorgesehen, dass eine Mündung des Schlitzes nach oben weist. Insbesondere kann der Schlitz Pedalzapfen von Fahrrädern mit hoher Pedalhöhe und Pedalzapfen von Fahrrädern mit niedriger Pedalhöhe aufnehmen. Vorzugsweise sind bei dieser Variante die Pedalzapfenhalterung und der Träger in einem Winkel zueinander angeordnet, der mindestens 70 Grad beträgt (vorzugsweise mindestens 80 Grad) und/oder höchstens 110 Grad beträgt (vorzugsweise höchstens 100 Grad) Insbesondere handelt es sich um einen rechten Winkel. Nach einer anderen Variante ist vorgesehen, dass die den Schlitz der Pedalzapfenhalterung begrenzenden Materialbereiche (z.B. Zapfen) insbesondere zusätzlich über Bügel mit der Fahrzeugwand verbunden sind, wodurch die Stabilität der Halterung erhöht wird. Dies ist ein Beispiel für die Möglichkeit, die Pedalhalterung über zumindest ein langgestrecktes Element mit rundem Querschnitt (z. B. statt über ein Blech), z.B. über ein Stück Rundstahl, an anderen Teilen des Fahrzeugs zu befestigen.

Auch nicht im Schutzbereich der Ansprüche liegend ist der Innenausstattungsgegenstand als Klappsitz ausgebildet, wobei die Pedalaufnahme z.B. eine Pedalzapfenhalterung mit einem Schlitz zur insbesondere formschlüssigen Aufnahme des Pedalzapfens des Fahrradpedals aufweist. Vorteilhaft ist dabei die Pedalaufnahme z.B. über einen Steg mit der Unterseite der Sitzfläche des z.B. an einer Wand (z. B. einer Seitenwand) des Fahrzeuges angeordneten Klappsitzes verbunden. Vorzugsweise ist dabei vorgesehen, dass eine Mündung des Schlitzes bei hochgeklappter Sitzfläche nach oben weist. Vorteilhaft sind dabei die Pedalaufnahme, insbesondere die Pedalzapfenhalterung, und der Steg in einem Winkel zueinander angeordnet, der mindestens 70 Grad beträgt (vorzugsweise mindestens 80 Grad) und/oder höchstens 110 Grad beträgt (vorzugsweise höchstens 100 Grad) Insbesondere handelt es sich um einen rechten Winkel.

Insbesondere bei Vorhandensein des Steges kann der Sitz bei heruntergeklappter Sitzfläche über eine Verbindung, die die Pedalaufnahme mit der Unterseite der Sitzfläche verbindet, (insbesondere über den Steg) an der Wand abgestützt sein und/oder kann die Verbindung (insbesondere der Steg) bei heruntergeklappter Sitzfläche den Sitz an der Wand arretieren. Auch wenn es sich bei der Pedalaufnahme nicht um eine Pedalzapfenhalterung handelt, kann die Pedalaufnahme an der Unterseite der Sitzfläche des Klappsitzes angeordnet sein. Die Pedalaufnahme steht daher lediglich bei nach oben hochgeklappter Sitzfläche des Klappsitzes zur Verfügung. In diesem Fall weist die Unterseite der Sitzfläche, d.h. der bewegliche, klappbare Teil des Sitzes, zur Seite (z.B. in etwa horizontaler Richtung) und kann ein Pedal in die Pedalaufnahme eingebracht werden.

Ebenfalls nicht in dem Schutzbereich der beigefügten Ansprüche liegend ist der Innenausstattungsgegenstand als Fahrzeugwand, z.B. Fahrzeugseitenwand, ausgebildet, wobei die Pedalaufnahme in einer Ausnehmung der Fahrzeugwand des Fahrzeuges eingelassen ist und die Pedalaufnahme z.B. eine Pedalzapfenhalterung mit einem Schlitz zur insbesondere formschlüssigen Aufnahme des Pedalzapfens des Fahrradpedals aufweist, wobei die Pedalzapfenhalterung die Ausnehmung in Richtung Fahrzeuginnenraum begrenzt. Vorteilhaft ist dabei auch hier vorgesehen, dass eine Mündung des Schlitzes nach oben weist.

Auch nicht im Schutzbereich der beigefügten Ansprüche liegend kann der Innenausstattungsgegenstand ein Fahrzeugsitz mit einer Rückenlehne sein, wobei die Pedalaufnahme hinter der Rückenlehne angeordnet ist und die Pedalaufnahme z.B. eine Pedalzapfenhalterung mit einem Schlitz zur insbesondere formschlüssigen Aufnahme des Pedalzapfens des Fahrradpedals umfasst. Dabei kann vorgesehen werden, dass die Pedalaufnahme zwischen den einander zugewandten Rückenlehnen entgegengesetzt orientierter Sitze oder zwischen der Rückenlehne eines Sitzes und einer im Fahrzeug angeordneten Wand, z.B. einer Abteilwand oder Trennwand, angeordnet ist. Bei entgegengesetzt orientierten Sitzen blicken die auf den Sitzen sitzenden Personen in einander entgegengesetzte, voneinander wegweisende Richtungen.

Nach einer besonderen Ausführungsform der Erfindung besteht die Pedalaufnahme bzw. besteht zumindest ein Teil davon aus einem nichtmetallischen Material, vorzugsweise aus einem kohlenstofffaserverstärktem Kunststoff (CFK).

Gemäß einem weiteren Gedanken ist das Anlehnen von Fahrrädern an Haltestangen in öffentlichen Verkehrsmitteln zwar auch bisher möglich, führt jedoch zu Beschädigungen des Fahrrads und/oder der Haltestange. Außerdem ist das Anlehnen instabil, d.h. das Fahrrad kann sich während der Fahrt des öffentlichen Verkehrsmittels unbeabsichtigt von der Haltestange entfernen. Dies konnte der Besitzer des Fahrrads durch zusätzliches Festhalten vermeiden.

Zur Lösung des Problems wird vorgeschlagen, eine Haltestange mit zwei in einem Abstand zueinander verlaufenden Stangenabschnitten vorzusehen, die sich insbesondere parallel zueinander erstrecken. Z.B. kann es sich bei den Stangenabschnitten um die zuvor bereits erwähnten Haltestangenabschnitte handeln, die in dem oben ebenfalls bereits erwähnten Halterabschnitt die Öffnung der Pedalaufnahme begrenzen.

Dadurch ist es möglich, das Fahrrad an beiden Stangenabschnitten gleichzeitig anzulehnen. Die dadurch erzielte Abstützung des Fahrrades wird stabiler, da das Fahrrad, z.B. eine Rahmenstange des Fahrrades, an zwei Punkten angelehnt ist. Dadurch kann auch eine Ausrichtung des abgestützten Fahrrades innerhalb des Fahrzeugs vorgegeben werden. Wenn das Fahrrad gleichzeitig an beiden Stangenabschnitten angelehnt wird, ist es in der durch die Positionierung der beiden Stangenabschnitte vorgegebenen Weise ausgerichtet. So kann zum Beispiel gewährleistet werden, dass mehrere Fahrräder Platz sparend in dem Fahrzeug gehalten werden können, dass ausreichend Platz für andere Gegenstände verbleibt und/oder dass Durchgangsbereiche für Passagiere nicht blockiert werden.

Wenn die Haltestange mit den beiden voneinander beabstandeten Stangenabschnitten die oben beschriebene Pedalaufnahme bildet, kann auch ein Pedal des Fahrrades von der Pedalaufnahme aufgenommen werden und dadurch gehalten werden. Das Halten des Pedals, insbesondere des Pedalzapfens, kann dabei zusätzlich zu dem Anlehnen eines anderen Teils des Fahrrads (insbesondere des Fahrradrahmens) an der Haltestange erfolgen. Alternativ kann lediglich das Pedal des Fahrrades durch die Pedalaufnahme aufgenommen werden und kann das Fahrrad über zumindest ein zusätzliches Befestigungselement an der Haltestange befestigt werden.

Bei dem zusätzlichen Befestigungselement handelt es sich z.B. um einen Gurt oder einen anderen langgestreckten Gegenstand, der vorzugsweise biegbar und/oder knickbar ist, sodass eine Schlaufe und/oder Umfassung eines Teils des Fahrrades und gleichzeitig der Haltestange mit Hilfe des Befestigungselements hergestellt werden kann.

Das Befestigungselement kann aber auch zur Befestigung zumindest eines Fahrrades an der Haltestange verwendet werden, wenn kein Pedal des Fahrrades oder der Fahrräder in einer Pedalaufnahme aufgenommen ist.

Das Befestigungselement weist vorzugsweise einen Verschluss auf, z.B. einen Klettverschluss, mit dem entgegengesetzte Enden und/oder in der Längsrichtung des Befestigungselements voneinander entfernte Bereiche miteinander verbunden werden können. Weitere mögliche Verschlüsse sind ein Gurtschloss oder eine Schnalle in der Art eines Hosengürtels.

Das zusätzliche Befestigungselement hat den Vorteil, dass es von einem Passagier, insbesondere von dem Besitzer des Fahrrades, mitgebracht werden kann. Z.B. ist auch ein Fahrradschloss, z.B. ein Kettenschloss, als Befestigungselement geeignet.

Diese Art der Befestigung eines Fahrrades an einer Haltestange benötigt sehr wenig Raum. Auch für das Befestigungselement, das selbst ein sehr geringes Volumen einnehmen kann, wird wenig Raum benötigt. Auch können derartige Befestigungselemente kostengünstig und auf einfache Weise hergestellt werden. Dies ist z.B. der Fall bei einem Gurt mit Klettverschluss, wie er während des Fahrradfahrens um den Unterschenkel des Fahrradfahrers geschlungen wird, um das Hosenbein des Fahrradfahrers vor Beschädigungen zu schützen.

Mit dem Befestigungselement kann nicht nur ein einziges Fahrrad, sondern können zumindest zwei Fahrräder gleichzeitig an derselben Haltestange befestigt werden.

Auch bei Befestigung nur eines einzigen Fahrrades verhindert die Befestigung mit Hilfe des Befestigungselements ein unbeabsichtigtes Entfernen des Fahrrades von der Haltestange. Außerdem kann auf einfache Weise ein unbeabsichtigtes Bewegen des Fahrrades relativ zu der Haltestange reduziert oder sogar verhindert werden. Auf diese Weise werden Beschädigungen des Fahrrades und/oder der Haltestange verhindert.

Gemäß einem weiteren Vorschlag weist die Haltestange zumindest in einem Stangenabschnitt und/oder in einem Oberflächenbereich ein weiches und/oder elastisches Oberflächenmaterial auf. Insbesondere kann das Oberflächenmaterial auf die tragende Konstruktion der Haltestange oder des Stangenabschnitts aufgebracht werden bzw. worden sein.

Ein derartiges Oberflächenmaterial verhindert Beschädigungen des Fahrrades. Als Material ist insbesondere Schaumstoff oder ein Elastomer geeignet.

Die Haltestange mit den zwei voneinander beabstandet verlaufenden Stangenabschnitten und/oder die Verwendung eines weichen und/oder elastischen Oberflächenmaterials einer Haltestange oder eines Haltestangenabschnitts ermöglicht aber auch das stabile bzw. beschädigungsfreie Anbringen von anderen Gegenständen, z.B. Kinderwagen oder Koffern. Ein Fahrrad oder die anderen Gegenstände können an einer Haltestange auch nicht nur innerhalb eines öffentlichen Verkehrsmittels auf diese Weise befestigt werden, sondern z.B. auch sonst im öffentlichen Bereich.

Wie eingangs erwähnt betrifft die Erfindung auch ein Fahrzeug des öffentlichen Verkehrs, insbesondere ein Schienenfahrzeug oder ein Bus. Zum Umfang der Erfindung gehört daher auch ein solches Fahrzeug mit dem Innenausstattungsgegenstand.

Nachfolgend wird die Erfindung anhand von Ausführungsbeispielen näher erläutert. In den Zeichnungen zeigen:
- Fig. 1: einen erfindungsgemäßen Innenausstattungsgegenstand in Form einer Haltestange mit einem daran gehaltenen Fahrrad,
- Fig. 2: eine Detailansicht zur Fig. 1,
- Fig. 3: eine Detailansicht einer Haltestange, nicht gemäß der Erfindung,
- Fig. 4: eine Detailansicht einer Haltestange, nicht gemäß der Erfindung,
- Fig. 5: eine Detailansicht einer erfindungsgemäßen Ausführungsvariante einer Haltestange mit Führungselementen,
- Fig. 6a-d: Ausführungsvariante, einer Haltestange jeweils für die Halterung zweier Fahrräder, wobei Fig. 6c und 6d nicht die Erfindung darstellen,
- Fig. 7a: einen Halterabschnitt, jedoch nicht entsprechend dem Gegenstand der Ansprüche,
- Fig. 7b: einen Halterabschnitts, nicht gemäß der Erfindung,

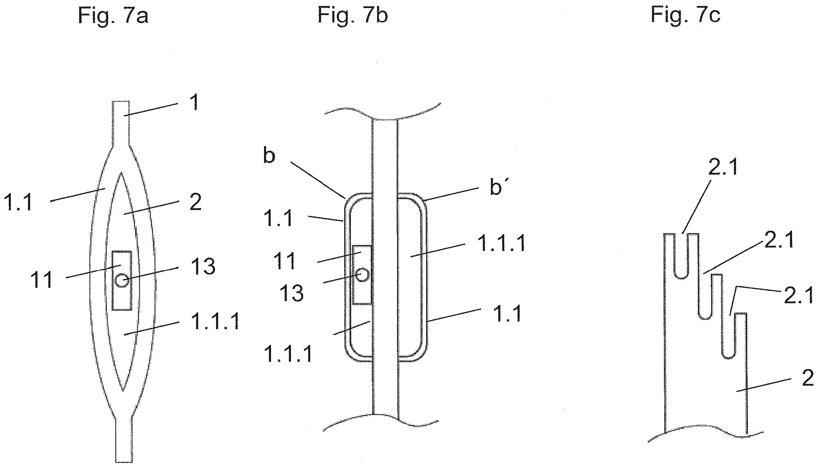

- Fig. 7 c: einen Innenausstattungsgegenstand zur Ausbildung eines Halterabschnitts, jedoch nicht entsprechend dem Gegenstand der Ansprüche,

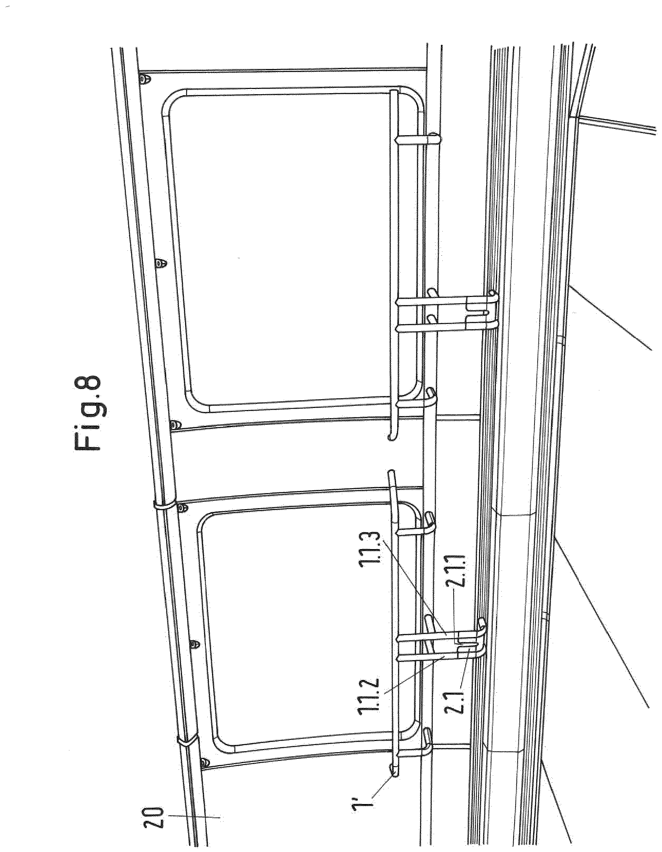

- Fig. 8: eine Ausführungsvariante einer Haltestange gemäß der Erfindung, die zur Befestigung an einer Seitenwand eines Schienenfahrzeuges ausgestaltet ist,

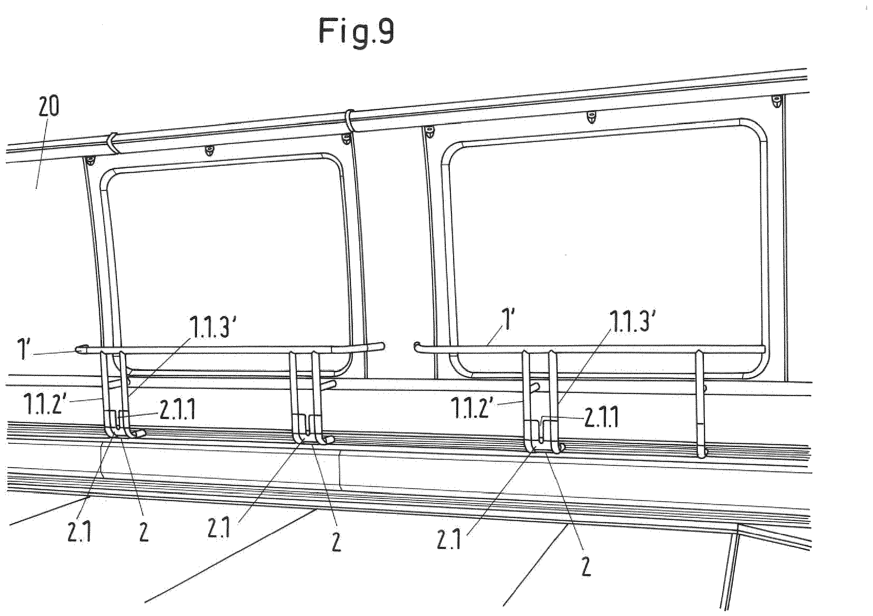

- Fig. 9: eine Ausführungsvariante einer Haltestange gemäß der Erfindung, die jeweils für eine Seitenwand ausgestaltet ist,

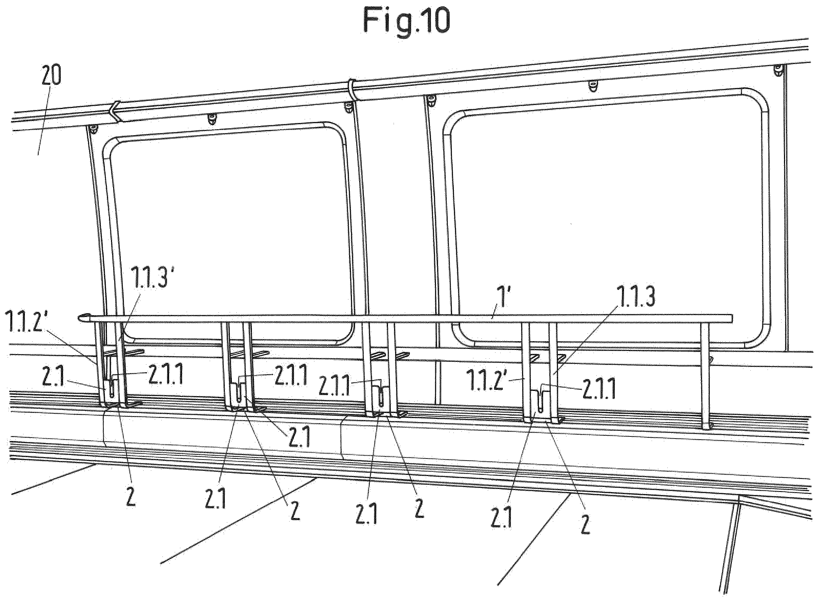

- Fig. 10: eine Ausführungsvariante einer Haltestange gemäß der Erfindung, die jeweils für eine Befestigung an einer Seitenwand ausgestaltet ist,

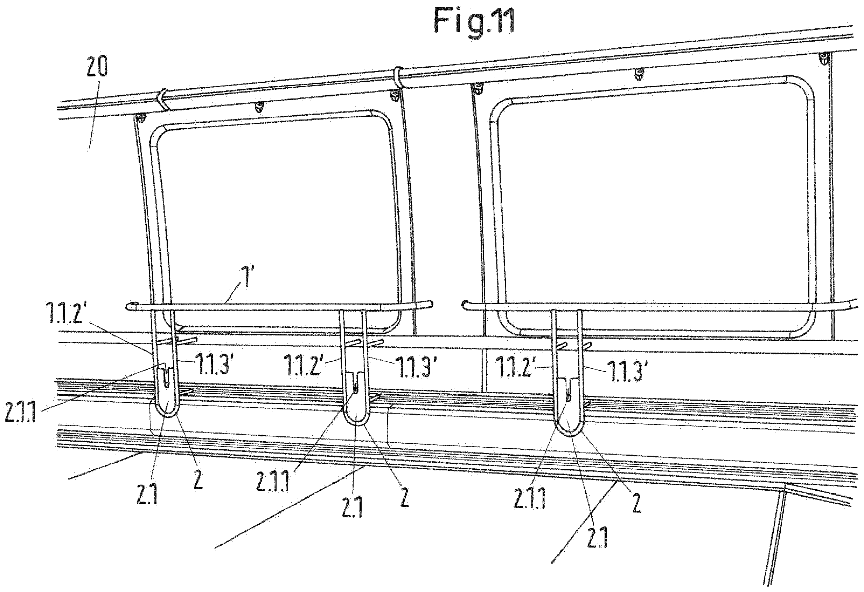

- Fig. 11: eine Ausführungsvariante einer Haltestange gemäß der Erfindung, die für eine Befestigung an einer Seitenwand ausgestaltet ist,

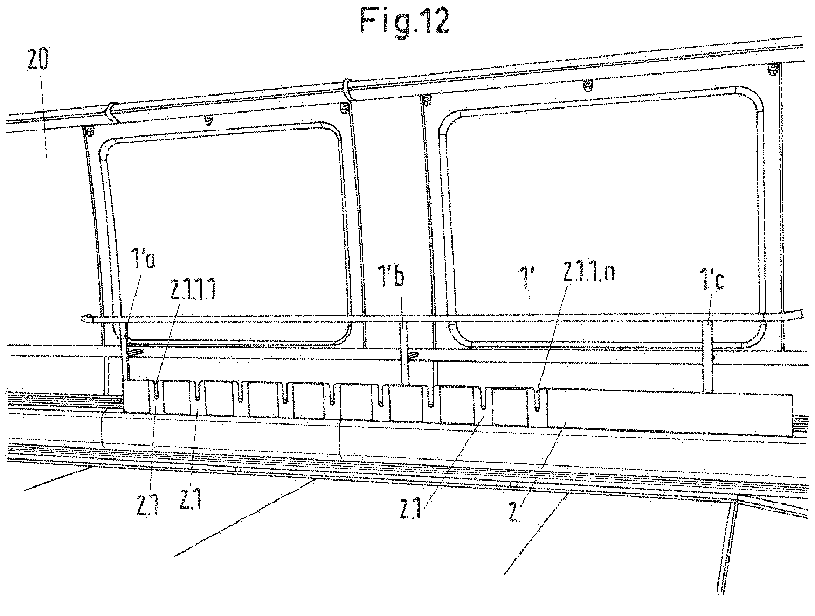

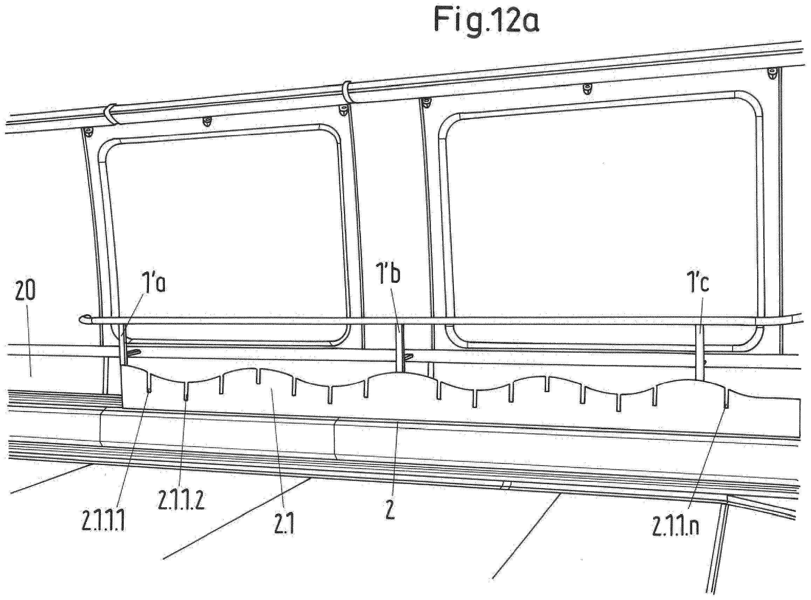

- Fig. 12: eine Ausführungsvariante einer Haltestange gemäß der Erfindung, die für eine Befestigung an einer Seitenwand ausgestaltet ist,
- Fig. 12a: eine Ausführungsvariante der Fig. 12,

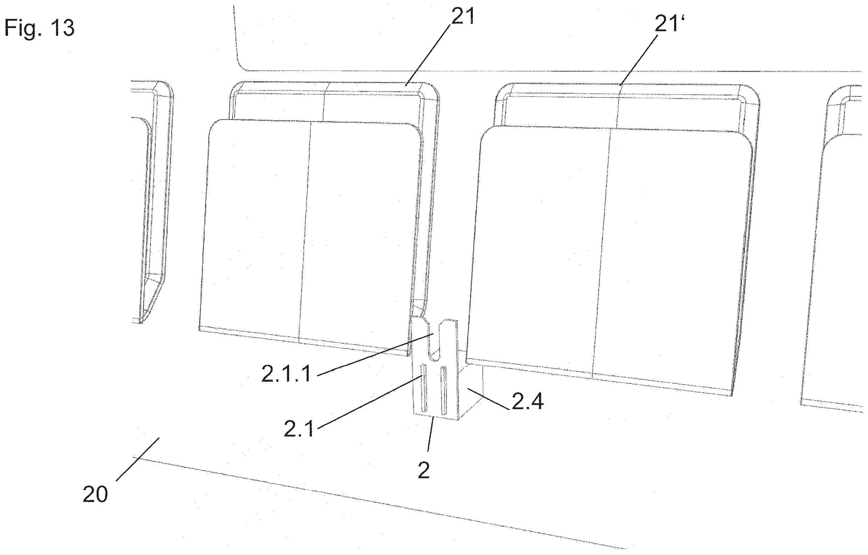

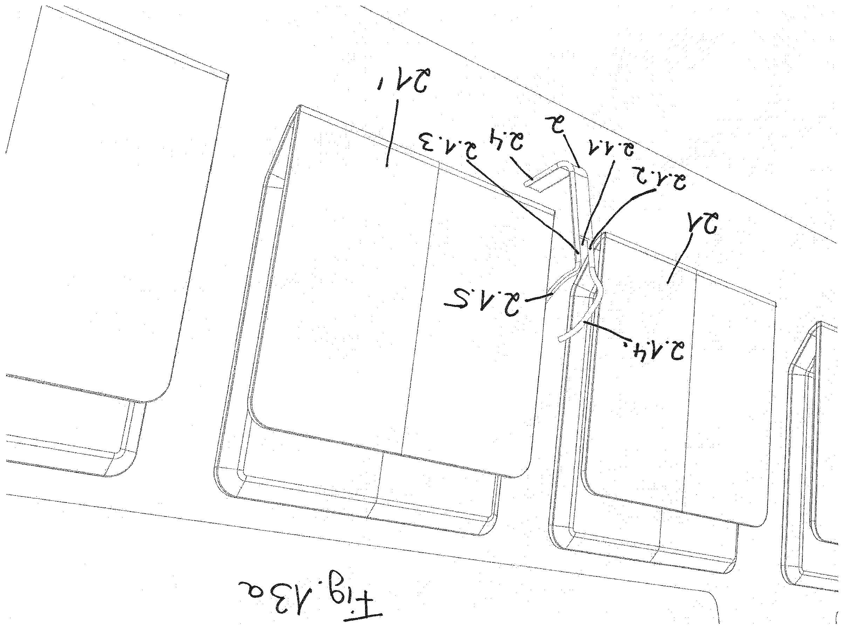

- Fig. 13: einen nicht unter die Ansprüche fallenden Innenausstattungsgegenstand zur Halterung von Zweirädern in Fahrzeugen des öffentlichen Nahverkehrs,
- Fig. 13a: eine Variante des Innenausstattungsgegenstandes nach Fig. 13,

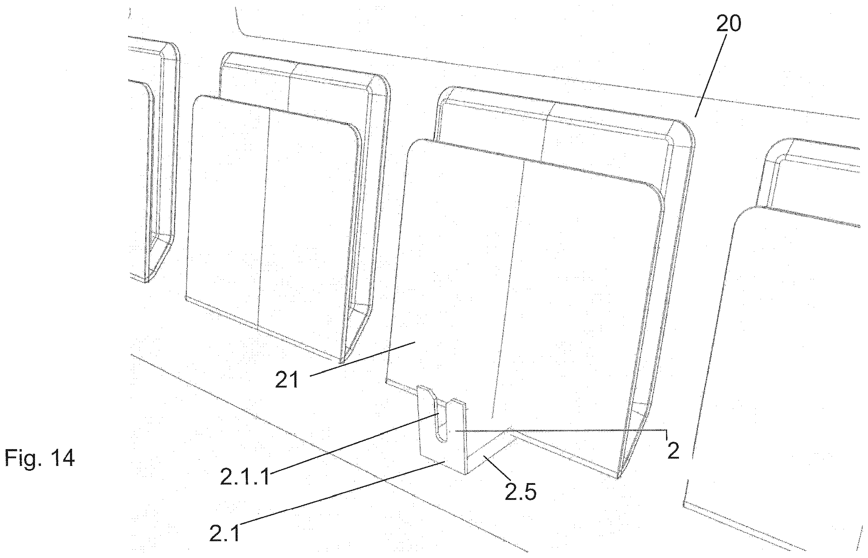

- Fig. 14: einen nicht unter die Ansprüche fallenden Innenausstattungsgegenstand zur Halterung von Zweirädern in Fahrzeugen des öffentlichen Nahverkehrs,

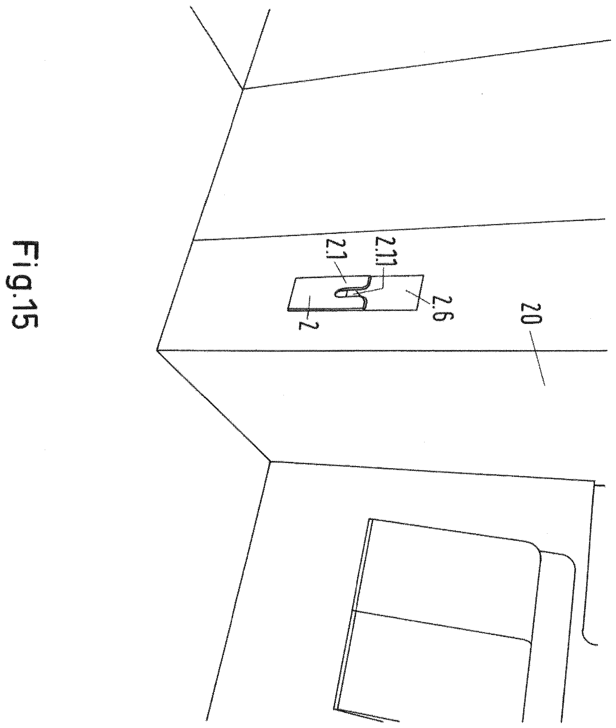

- Fig. 15: einen nicht unter die Ansprüche fallenden Innenausstattungsgegenstand zur Halterung von Zweirädern in Fahrzeugen des öffentlichen Nahverkehrs,

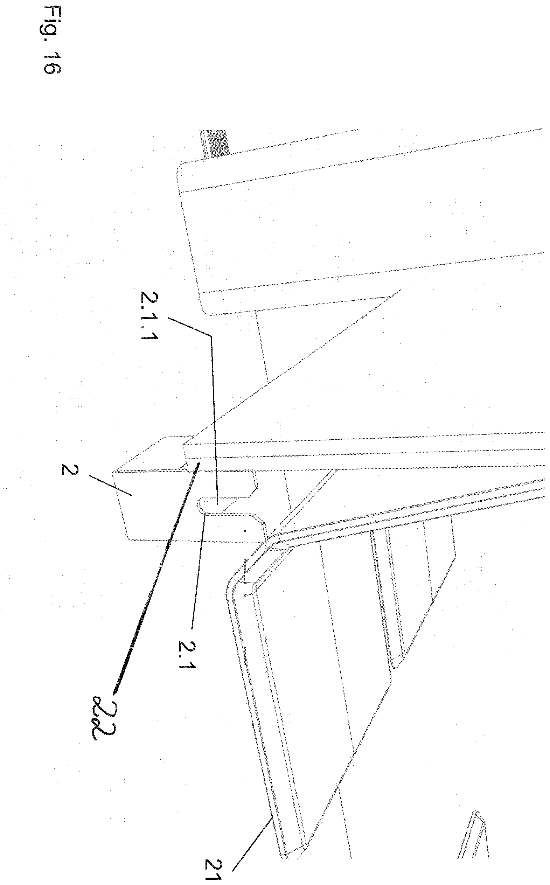

- Fig. 16: einen nicht unter die Ansprüche fallenden Innenausstattungsgegenstand zur Halterung von Zweirädern in Fahrzeugen des öffentlichen Nahverkehrs,

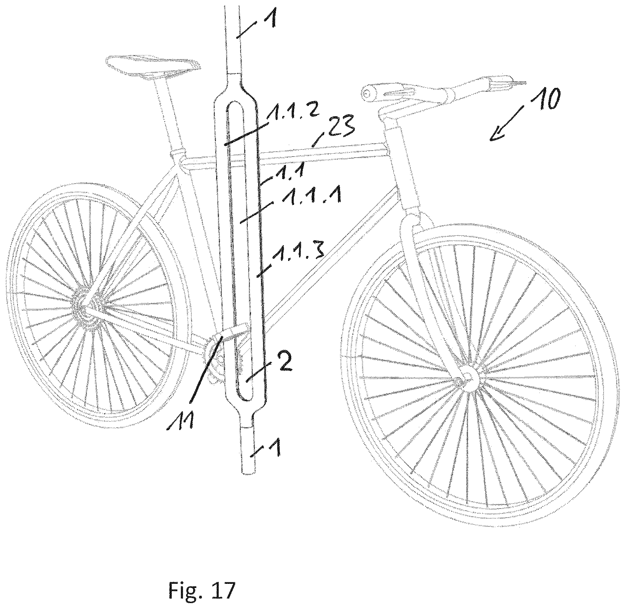

- Fig. 17: eine Ausführungsvariante nicht gemäß der Erfindung, wobei die Pedalaufnahme jedoch keine Pedalzapfenhalterung mit Schlitz aufweist,

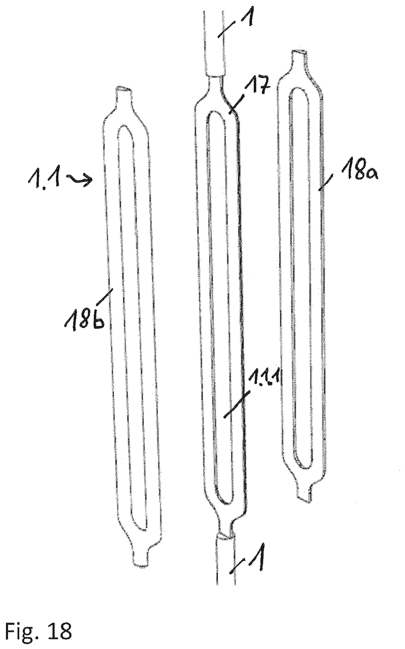

- Fig. 18: den Aufbau eines Ausführungsbeispiels des in Fig. 17 dargestellten Halterabschnitts,

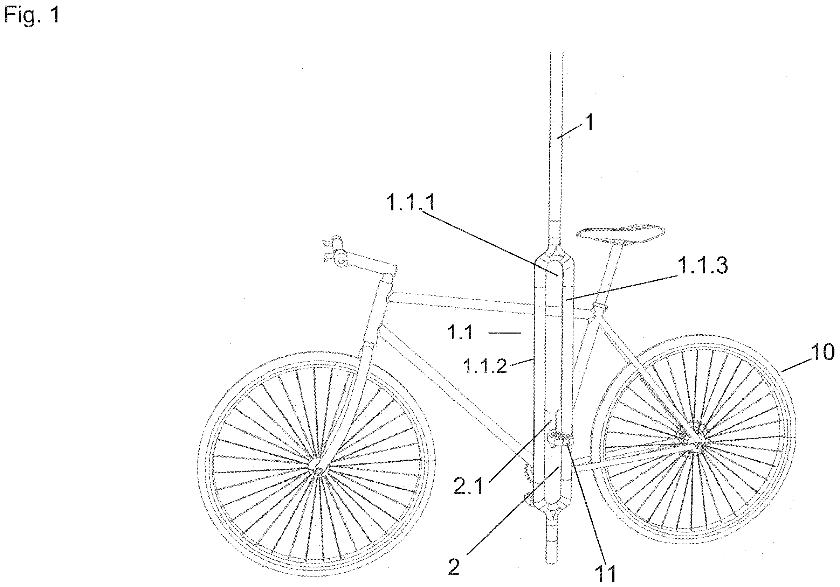

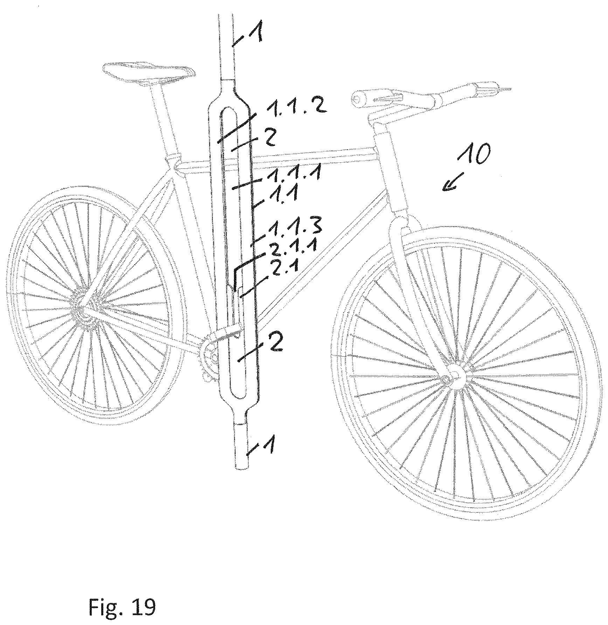

- Fig. 19: eine erfindungsgemäße Anordnung ähnlich der in Fig. 1, wobei der Halterabschnitt jedoch ein weiches und/oder elastisches Oberflächenmaterial aufweist,

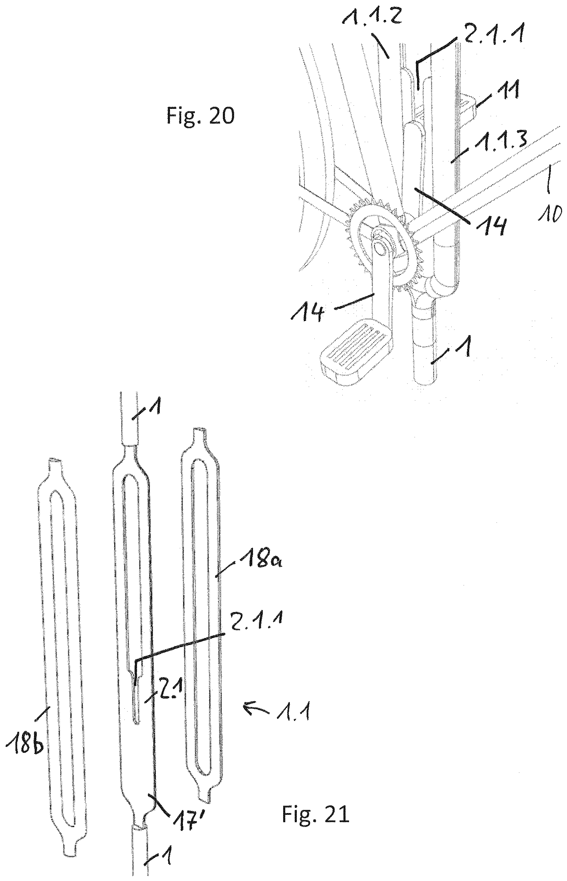

- Fig. 20: eine Detaildarstellung des unteren Bereichs des Halterabschnitts aus Fig. 19, wobei ein Pedalzapfen des Fahrrades in einem nach oben offenen Schlitz der Pedalaufnahme des Halterabschnitts aufgenommen ist,
- Fig. 21: den Aufbau eines Ausführungsbeispiels des in Fig. 19 und Fig. 20 dargestellten Halterabschnitts,

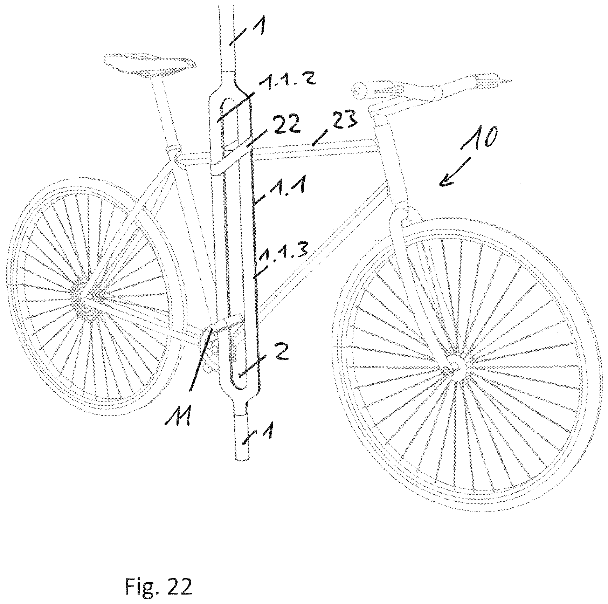

- Fig. 22: eine Anordnung wie in Fig. 17, wobei jedoch das Fahrrad zusätzlich mit einem Befestigungselement an dem Halterabschnitt befestigt ist,

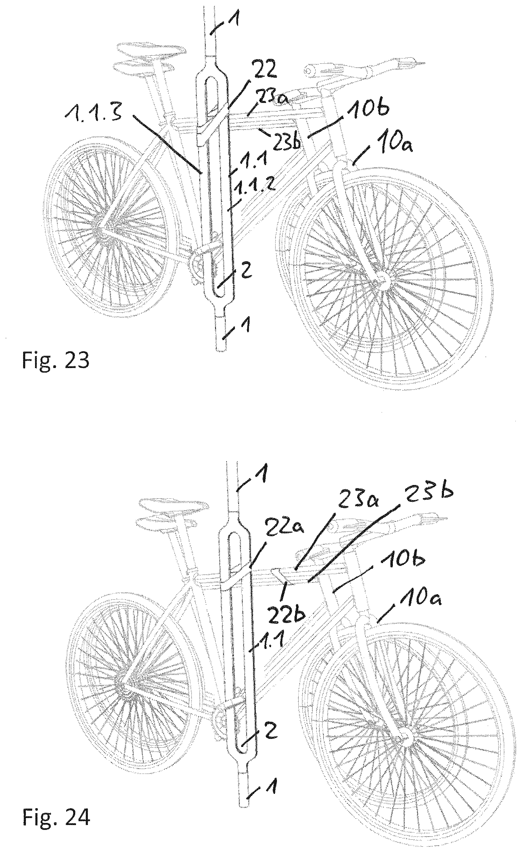

- Fig. 23: eine Anordnung wie in Fig. 22, wobei jedoch mit Hilfe des Befestigungselements ein zweites Fahrrad an dem ersten Fahrrad und an dem Halterabschnitt befestigt ist, und
- Fig. 24: eine Anordnung wie in Fig. 23, wobei jedoch durch ein zusätzliches Befestigungselement die beiden Fahrräder aneinander befestigt sind.

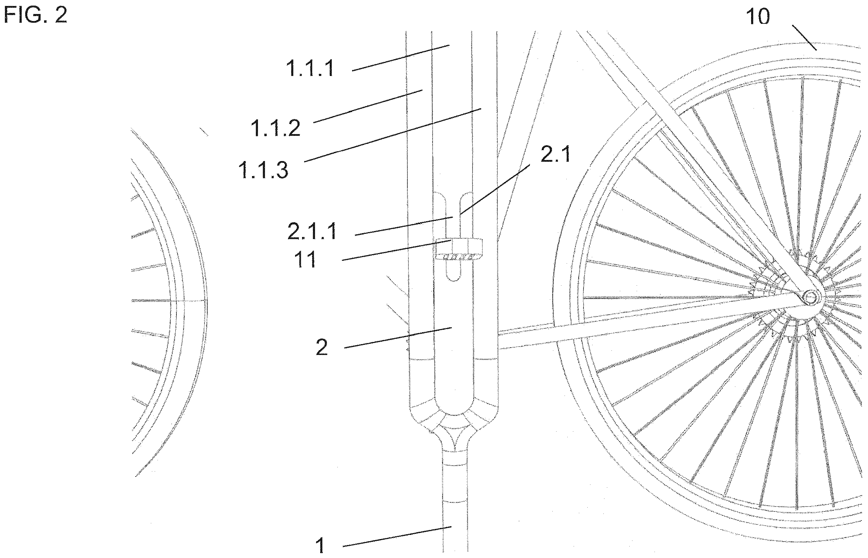

In den Figuren 1 und 2 ist ein Innenausstattungsgegenstand in Form einer Haltestange mit einer Halterung für Fahrräder zur Anordnung in einem Fahrzeug des öffentlichen Nahverkehrs dargestellt. Auf die Darstellung des Fahrzeuges wurde hierbei verzichtet. Die Haltestange 1 weist eine Pedalaufnahme 2 mit einer Pedalzapfenhalterung 2.1 für ein Fahrradpedal 11 auf, die in einer Öffnung 1.1.1 im Halterabschnitt 1.1 angeordnet ist, welche durch sich aufgabelnde und/oder parallel verlaufende Haltestangenabschnitte 1.1.2, 1.1.3 begrenzt wird. Die Haltestangenabschnitte 1.1.2, 1.1.3 können dabei z.B. aus Rund- oder Flachstahl bestehen. Die Öffnung 1.1.1 ist vorzugsweise länglich ausgestaltet, um die Einführung eines Fahrradpedals 11 von oben durch ein leichtes Anheben des Fahrrades 10 zu erleichtern. Die Pedalaufnahme 2 wird hier durch eine in der Öffnung 1.1.1 angeordnete Pedalzapfenhalterung 2.1 zur Fixierung des Fahrrades gebildet. Die Pedalzapfenhalterung 2.1 bildet einen Schlitz 2.1.1, in den der Pedalzapfen des Pedals 11 des Fahrrades eingeführt werden kann. Die Breite des Schlitzes 2.1.1 ist geringer als die Breite bzw. Dicke des angrenzenden Fahrradpedals 11 auf der einen Seite und die Breite des Endbereichs der angrenzenden Tretkurbel auf der anderen Seite, wodurch das Fahrrad 10 formschlüssig an der Haltestange 1 gehalten wird. Eine Mündung des Schlitzes 2.1.1 weist nach oben, insbesondere senkrecht nach oben, und bildet eine Einführöffnung für den Pedalzapfen, wobei der obere Abschnitt des Schlitzes 2.1.1 zur Aufnahme von Pedalzapfen von Fahrrädern mit hoher Pedalhöhe ausgestaltet ist. Der untere Abschnitt des Schlitzes 2.1.1 ist zur Aufnahme von Pedalzapfen von Fahrrädern mit niedriger Pedalhöhe vorgesehen. Der Schlitz 2.1.1 kann derart angeordnet sein, dass ein in die Halterung eingesetztes Fahrrad zumindest mit einem Rad nicht mehr auf dem Boden aufsetzt. Dies ist der Fall, wenn der Abstand des Pedalzapfens zum Boden in einer oberen Stellung der jeweiligen Tretkurbel bei stehendem Fahrrad geringer ist als der Abstand des unteren Endes des Schlitzes 2.1.1 zum Boden. Der Schlitz (dies gilt auch für andere Ausführungen) kann im oberen und unteren Abschnitt die gleiche Breite haben.

Die Haltestange 1 kann zumindest abschnittsweise mit einer elastischen und/oder weichen, z.B. gummierten, Oberfläche beschichtet sein, um zu verhindern, dass die Stange selbst oder Teile des Fahrrades durch die Halterung zerkratzt werden. Dies gilt auch für andere Ausführungen der Stange.

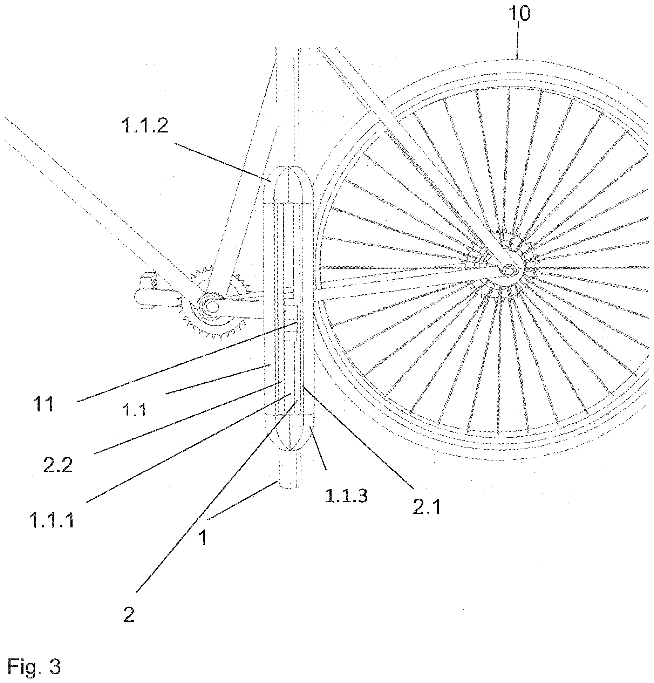

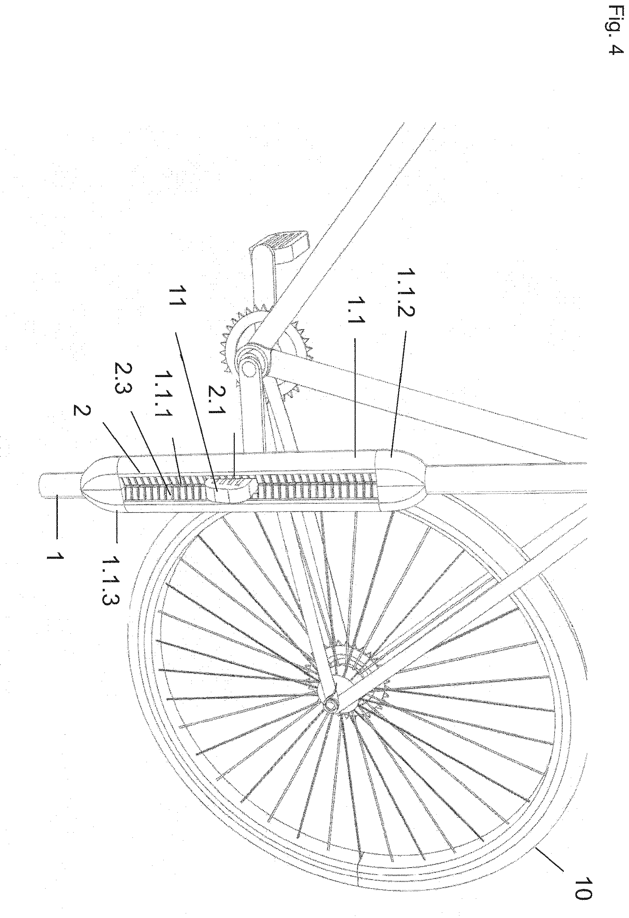

In den Figuren 3 und 4 werden nicht erfindungsgemäße Ausführungsformen gezeigt. Die Pedalzapfenhalterung 2.1 der Pedalaufnahme 2 innerhalb der Öffnung 1.1.1 des Halterabschnitts 1.1 wird hier durch feste oder federnde klemmend wirkende Elemente 2.2 bzw. 2.3 gebildet. Diese können als feste oder federnde Gummiprofile 2.2 innerhalb des Halterabschnitts 1.1 angeordnet sein (Fig. 3) oder aus einer Vielzahl von federnden Elemente 2.3 aus Metall oder einem Elastomer wie beispielsweise einem Gummi bestehen, die zahnartig und sich gegenüberliegend im genannten Halterabschnitt 1.1 angeordnet sind (Fig. 4). Das Pedal 11 eines Fahrrades kann dann zwischen diese Elemente bis zum Pedalzapfen eingeführt werden, wodurch das Fahrrad sicher gehalten wird.

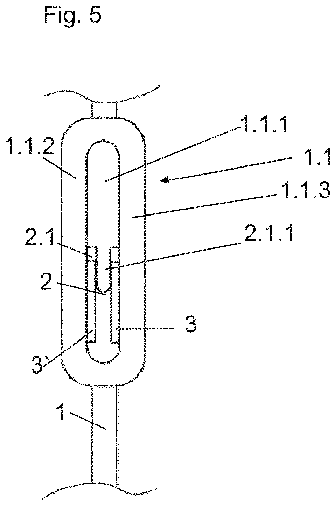

In der Fig. 5 wird in einer schematischen Darstellung die Anordnung von Führungselementen 3, 3' gezeigt, die eine senkrechte Führung der Pedale erlauben. Um den Pedalzapfen in die Pedalzapfenhalterung 2.1 einzuführen, wird das Pedal in eine senkrechte Position gedreht und zwischen den Führungselementen 3, 3' eingeführt.

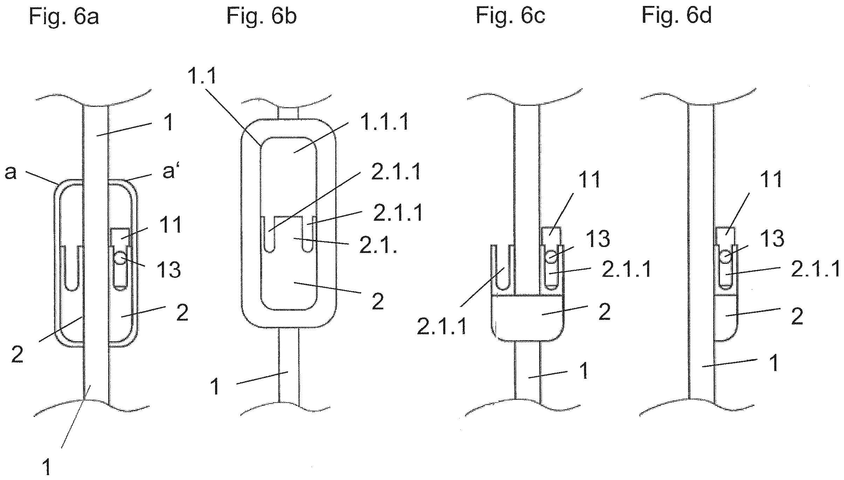

In den Fig. 6a bis 6d werden diverse Ausführungsvarianten für die Ausbildung einer Haltestange zur Halterung von zwei Fahrrädern (nicht dargestellt) gezeigt. Neben der oben beschriebenen Ausbildung des Halterabschnitts 1.1 der Haltestange 1 gemäß der obigen Beschreibung, können die Pedalaufnahmen 2 an einer durchgehenden vertikalen Haltestange 1 auch durch Bügel a, a' (Fig. 6a) begrenzt werden. Die Pedalzapfenhalterungen 2.1 sind jeweils zwischen den Bügeln a, a' und der Haltestange 1 angeordnet. Fig. 6a, 6c und 6d zeigen rechts jeweils ein Pedal 11 und dessen Pedalzapfen 13, der in der Halterung gehalten wird.

Nach Fig. 6b ist im Halterabschnitt 1.1 eine Pedalzapfenhalterung 2.1 mit zwei parallelen Schlitzen 2.1.1 vorgesehen, so dass nach dieser Variante zwei Fahrräder gegenüberliegend mit den Zapfen der Pedale in den Schlitzen gehalten werden können. Um die platzsparende und sichere Anordnung von Fahrrädern zu verbessern, können die Schlitze 2.1.1 auch versetzt oder schräg zueinander verlaufen. Die Pedalzapfenhalterung 2.1 kann einstückig aus einem Blech mit zwei Schlitzen 2.1.1 hergestellt sein.

Nicht zum Gegenstand der Ansprüche gehört, dass die Pedalzapfenhalterung 2.1 mit den schlitzförmigen Ausnehmungen 2.1.1 direkt an einer vertikalen Haltestange 1 angeordnet ist (Fig. 6c und d). Dabei ist die Anordnung von einer oder von wenigstens zwei Pedalzapfenhalterungen 2.1 möglich.

In der Fig. 7a ist ein Fahrradhalter dargestellt, der einen Halterabschnitt 1.1 mit einer mandelförmig ausgebildeten Öffnung 1.1.1 hat. Die Pedalaufnahme 2 weist hier keine gesonderte Pedalzapfenhalterung 2.1 für das Fahrradpedal 11 auf. Sowohl bei dieser als auch bei den vorhergehenden Ausführungsformen kann die Pedalaufnahme 2 schmal und bevorzugt nur wenig breiter als die Dicke eines Fahrradpedals ausgeführt werden, um eine sichere Halterung des Fahrrades zu gewährleisten.

Nach Fig. 7b sind dafür bügelartige Elemente b, b' an einer durchgehenden vertikalen Haltestange 1 angeordnet. Die Anordnung kann einseitig oder doppelseitig wie in der gezeigten Ausführung erfolgen. Dadurch wird die Halterung zweier Fahrräder ermöglicht.

Die Fig. 7c zeigt die Ausbildung einer Pedalaufnahme 2 mit einer Pedalzapfenhalterung 2 mit Schlitzen 2.1.1, welche in der Höhe und Breite versetzt zueinander angeordnet sind. Die verschiedenen Höhenabstufungen erleichtern die Aufnahme verschieden großer Fahrräder bzw. verschiedener Pedalhöhen. Derartig ausgebildete Aufnahmen sind entweder in Verbindung mit einer Haltestange oder auch in einer davon unabhängigen Anordnung in Verbindung mit dem Fahrzeugboden oder der Fahrzeugwand einsetzbar.

In den Fig. 8 bis 10 sind weitere vorteilhafte Ausgestaltungen der Erfindung dargestellt. Die Haltestange 1' verläuft hier mit mindestens einem Endabschnitt horizontal und ist damit an einer Fahrzeugseitenwand 20 befestigt. An der horizontalen Haltestange 1' sind mindestens zwei vertikale, parallel verlaufende und voneinander beabstandete Haltestangenabschnitte 1.1.2' und 1.1.3' vorgesehen, die sich abschnittsweise in Richtung des Fahrzeugbodens erstrecken und sich davon ausgehend über eine Biegung bis zu einer Befestigung an der Fahrzeugseitenwand 20 erstrecken. Zwischen den Haltestangenabschnitten 1.1.2' und 1.1.3' ist eine Pedalaufnahme 2 mit einer Pedalzapfenhalterung 2.1 vorgesehen, die einen Schlitz 2.1.1 zur Aufnahme des Zapfens eines Fahrradpedals aufweist. Die Anzahl und Abstände der Stangenabschnitte 1.1.2' und 1.1.3' mit den Pedalzapfenhaltern 2.1 variieren in Fig. 8 bis 10.

Die Fig. 11 zeigt eine Ausführungsform, bei welcher die Pedalaufnahme 2 mit der Pedalzapfenhalterung 2.1 in einem sich ausgehend von einem horizontalen Haltestangenabschnitt 1' in Richtung des Fahrzeugbodens erstreckenden, unten geschlossenen Bügel angeordnet ist. Je nach Platzverhältnissen können ein (rechtsseitiges Ausführungsbeispiel) oder mehrere (linksseitiges Ausführungsbeispiel) Bügel an einer horizontalen Haltestange 1' angeordnet werden. Jeder Bügel kann direkt oder indirekt über die in ihn integrierte Pedalzapfenhalterung 2.1 mit der Fahrzeugwand verbunden sein.

Eine weitere Variante zur Anordnung einer Haltestange 1' an einer Fahrzeugseitenwand 20 ist in der Fig. 12 dargestellt. Die Haltestange 1' ist auch hier mit mindestens einem Endabschnitt horizontal an einer Fahrzeugseitenwand 20 befestigt. Zwischen von der horizontale Haltestange 1' abgehenden senkrechten Rohrabschnitten 1à, 1'b, 1'c, die nahe des Fahrzeugbodens oder der Seitenwandverkleidung des Fahrzeuges, oder nahe der Heizungs- und/oder Lüftungskanälen verlaufen, ist ein als Pedalaufnahme 2 ausgebildeter bandartiger Abschnitt vorgesehen, der eine Vielzahl von Pedalzapfenhalterungen 2.1 mit Schlitzen 2.1.1.n zur Aufnahme des Zapfens eines Fahrradpedals aufweist. Der Abschnitt ist nach einer weiteren Ausführung gemäß der Fig. 12a als wellenartiges Schlitzblech ausgeführt. Die Schlitze 2.1.1.n sind dadurch in unterschiedlichen Höhen angeordnet, um die Fixierung von Pedalen in unterschiedlichen Pedalhöhen zu ermöglichen. Die genannten Abschnitte können einstückig oder mehrstückig aus Blech hergestellt sein.

In der Fig. 13 ist ein Fahrradhalter mit einer Pedalzapfenhalterung 2.1 mit einem Schlitz 2.1.1 dargestellt, der an einer Fahrzeugseitenwand 20 zwischen Klappsitzen 21, 21'angeordnet ist. Der zwischen zwei Klappsitzen verbleibende Platz wird für die Pedalzapfenhalterung 2.1 genutzt. Um einen ausreichend großen Abstand zur Fahrzeugseitenwand 20 zu gewährleisten, ist ein Träger 2.4 vorgesehen, der Fahrzeugseitenwand 20 und Pedalzapfenhalterung 2.1 miteinander verbindet.

In der Fig. 13a wird eine weitere Ausführung gezeigt. Die den Schlitz 2.1.1 der Pedalzapfenhalterung 2.1 begrenzenden Materialbereiche 2.1.2, 2.1.3 sind hier über Bügel 2.1.4, 2.1.5 zusätzlich mit der Fahrzeugseitenwand 20 verbunden, wodurch eine höhere Stabilität der Pedalaufnahme erreicht wird.

Die Anordnung eines Fahrradhalters kann auch direkt am klappbaren Sitz 21 eines Klappsitzes erfolgen bzw. an der Unterseite der Sitzfläche erfolgen, wie in Fig. 14 dargestellt. Die Pedalaufnahme 2 mit der Pedalzapfenhalterung 2.1 ist dabei mit dem Sitz 21 verbunden, wobei der Fahrradhalter zur Benutzung des Sitzes 21 mit der Sitzfläche heruntergeklappt werden kann. Vorzugsweise ist die Fahrradhalterung an der Unterseite der Sitzfläche angeordnet. Die Fahrradhalterung kann bei heruntergeklappter Sitzfläche an der Seitenwand des Fahrzeuges anliegen und somit zugleich als Abstützung und/oder als Arretierung der Sitzfläche dienen. Die Pedalzapfenhalterung 2.1 kann dazu beispielsweise über einen Steg 2.5 mit der Sitzfläche verbunden sein.

Es ist auch denkbar, dass die Pedalzapfenhalterung 2.1 direkt an einer Fahrzeugwand 20 angeordnet oder in die Fahrzeugwand 20 eingelassen ist. Eine derartige Ausführung ist in der Fig. 15 dargestellt. Dabei kann in der Fahrzeugwand 20 eine Ausnehmung 2.6 vorgesehen sein, die in Richtung Fahrzeuginnenraum durch die mit einem Schlitz 2.1.1 versehene Pedalzapfenhalterung 2.1 begrenzt wird. Somit wird ein in die Pedalzapfenhalterung 2.1 eingesetztes Fahrradpedal, das ansonsten vorsteht und ein mögliches Verletzungsrisiko für vorbeigehende Passagiere darstellt, vollständig umschlossen. Die Fahrzeugwand ist in dem Beispiel eine Wand eines vorspringenden Bereichs. Es ist aber auch die Integration der Pedalzapfenhalterung in eine Seitenwand oder in eine Trennwand zwischen Passagierabteilen möglich.

Nach einer weiteren in der Fig. 16 dargestellten Ausführungsvariante ist vorgesehen, dass die Pedalaufnahme 2 mit der Pedalzapfenhalterung 2.1 hinter der Rückenlehne eines Sitzes 21 angeordnet ist, wobei die Halterung unter der schräg nach oben verlaufenden Rückenlehne angeordnet ist. Aufgrund der aus Ergonomiegründen schrägen Anordnung der Rückenlehne verbleibt hinter der Rückenlehne ein Freiraum. Auch wenn hinter dem Sitz eine Trennwand 22 angeordnet ist, kann der Platz zwischen der Trennwand 22 der Rückenlehne des Sitzes für die Anordnung einer Pedalaufnahme 2 genutzt werden.

Die in Fig. 17 dargestellte Anordnung ist der in Fig. 1 dargestellten ähnlich. Die Haltestange 1 weist ebenfalls einen Halterabschnitt 1.1 auf, der wiederum zwei Haltestangenabschnitte 1.1.2 und 1.1.3 aufweist, welche in dem Ausführungsbeispiel parallel zueinander verlaufen. An ihren oberen und unteren Enden laufen die beiden Haltestangenabschnitte zusammen, d.h., anders ausgedrückt, oben und unten an dem Halteabschnitt 1.1 befindet sich jeweils eine Gabelung. Im Ergebnis bilden die Gabelungen und die Haltestangenabschnitte 1.1.2, 1.1.3 eine geschlossen umrandete Öffnung, die als Pedalaufnahme 2 ausgestaltet ist. Ein Fahrradpedal 11 des Fahrrades 10, welches in Fig. 17 dargestellt ist, erstreckt sich durch die Öffnung der Pedalaufnahme 2 hindurch.

Insbesondere die obere Rahmenstange 23 des Fahrrades 10, welche sich etwa in horizontaler Richtung erstreckt, kann gleichzeitig an beide Haltestangenabschnitte 1.1.2, 1.1.3 angelehnt werden. Alternativ, wie noch anhand von weiteren Figuren erläutert wird, kann z.B. diese obere Rahmenstange 23 an zumindest einem der Haltestangenabschnitte 1.1.2, 1.1.3 befestigt werden.

In jedem Fall ist die Befestigung oder Abstützung des Fahrrades 10 aufgrund des Vorhandenseins von zwei in einem Abstand zueinander verlaufenden Haltestangenabschnitten gegenüber einer einzelnen Haltestange verbessert. Beim Anlehnen des Fahrrads an beide Haltestangenabschnitte entsteht Kontakt an zwei voneinander beabstandeten Kontaktpunkten. Bei der Befestigung gleichzeitig an beiden Haltestangenabschnitten z.B. über das in Fig. 22 dargestellte Befestigungsmittel 22 ist die Befestigung stabiler als bei der Befestigung an einer einzelnen Haltestange, da die Befestigungskräfte nicht nur in einer Richtung, sondern in der Art zweier benachbarter Seiten eines Dreiecks in zwei Richtungen wirken.

Wie Fig. 18 zeigt, ist der Halteabschnitt 1.1 aus Fig. 17 vorzugsweise aus drei Stücken aufgebaut. Dabei bildet ein tragendes Element 17, welches fest mit den unten und oben in Fig. 18 dargestellten weiteren Abschnitten der Haltestange 1 verbunden ist, das tragende Element. Es ist z.B. aus Metall gefertigt. Im Ausführungsbeispiel weist das tragende Element 17 an seiner links nach vorne und rechts nach hinten in Fig. 18 weisenden Seite jeweils eine ebene Oberfläche auf. Auf diese ebenen Oberflächen wird jeweils eines der ebenfalls in Fig. 18 dargestellten Oberflächenelemente 18a, 18b aufgebracht, wobei die Oberflächenelemente 18 aus einem weichen und/oder elastischen Material gebildet sind. In dem Ausführungsbeispiel bildet nicht nur das tragende Element 17, sondern bilden auch die Oberflächenelemente 18 jeweils separat eine geschlossene Umrandung der Öffnung der Pedalaufnahme 2 aus Fig. 17.

Die in Fig. 19 dargestellte Ausgestaltung einer Haltestange 1 unterscheidet sich von der in Fig. 17 dargestellten durch die unten in der Öffnung gebildete Pedalzapfenhalterung 2.1 mit einem nach oben offenen Schlitz 2.1.1. Insbesondere gleicht sie mit Ausnahme der mehrteiligen Konstruktion des Halterabschnitts 1.1 der in Fig. 1 dargestellten Ausführung.

Aus Fig. 20 ist erkennbar, dass sich vor dem Schlitz 2.1.1 ein Stück der Tretkurbel 14 des Fahrrades 10 befindet, während sich gleichzeitig hinter dem Schlitz 2.1.1 das Tretelement des Pedals 11 befindet. Folglich befindet sich in dem Schlitz 2.2.1 der Pedalzapfen des Pedals 11, über den das Tretelement mit der Tretkurbel 14 verbunden ist.

Fig. 21 zeigt ähnlich wie Fig. 18 für die Ausführungsform der Fig. 17, dass der Halterabschnitt 1.1 dreiteilig ausgeführt ist. Gegenüber der Ausgestaltung aus Fig. 18 unterscheidet sich die Ausgestaltung in Fig. 21 durch das modifizierte tragende Element 17'. Es bildet vorzugsweise einstückig auch die Pedalzapfenhalterung 2.1 mit dem oben offenen Schlitz 2.1.1 aus. Ansonsten kann die Ausführung der Fig. 21 in gleicher Weise konstruiert sein wie die Ausführung der Fig. 18. Aufgrund der Pedalzapfenhalterung 2.1 kann das in Fig. 19 dargestellte Fahrrad 10 wie bereits anhand der Detaildarstellung in Fig. 20 erläutert gehalten werden.

Fig. 22 zeigt die bereits kurz erwähnte, gegenüber der Anordnung in Fig. 17 zusätzliche Befestigung des Fahrrades 10 über ein langgestrecktes Befestigungselement 22 an dem Halterabschnitt 1.1. Bei dem langgestreckten Befestigungselement 22 handelt es sich z.B. um einen Gurt mit Klettverschluss. Durch die zusätzliche Befestigung wird das Fahrrad 10 besonders stabil an der Haltestange 1 gehalten, obwohl die Pedalaufnahme 2 zwar das Pedal 11 des Fahrrades 10 aufnimmt, jedoch nicht den Pedalzapfen des Pedals in einem Schlitz fixiert.

Fig. 23 veranschaulicht, dass nicht nur ein erstes Fahrrad 10a, sondern auch ein zweites Fahrrad 10b gleichzeitig mit einem langgestreckten Befestigungselement 22 an dem Halterabschnitt 1.1 befestigt werden kann. Vorzugsweise werden die Fahrräder 10a, 10b an ihren oberen Rahmenstangen 23a, 23b mit dem Halterabschnitt 1.1 verbunden. Z.B. wird das langgestreckte Befestigungselement 22 mehrfach um zumindest einen der Haltestangenabschnitte 1.1.2, 1.1.3 und um zumindest eine der oberen Rahmenstangen 23 herumgewickelt.

Fig. 24 zeigt ebenfalls wie Fig. 23 zwei an einem Halterabschnitt 1.1 befestigte Fahrräder 10a, 10b. Außer der Befestigung eines der Fahrräder oder beider Fahrräder über ein erstes langgestrecktes Befestigungselement 22a an dem Halterabschnitt 1.1, sind die beiden Fahrräder an ihren oberen Rahmenstangen 23a, 23b über ein zweites langgestrecktes Befestigungselement 22b lediglich miteinander verbunden. Jedes der Befestigungselemente 22 bildet in dem befestigten Zustand mindestens einen Umlauf um die miteinander befestigten Gegenstände und weist vorzugsweise einen Verschluss auf, der in dem befestigten Zustand sich in seinem geschlossenen Zustand befindet.

## Patentansprüche

1. Fahrzeug des öffentlichen Verkehrs mit einem Innenausstattungsgegenstand (1, 20, 21), wobei der Innenausstattungsgegenstand (1, 20, 21) eine Pedalaufnahme (2) für wenigstens ein Fahrradpedal (11) aufweist,
**dadurch gekennzeichnet,**
**dass** der Innenausstattungsgegenstand (1, 20, 21) eine Haltestange (1; 1') für Fahrgäste aufweist, an der die Pedalaufnahme (2) ausgebildet ist, und dass die Pedalaufnahme (2) zwischen zwei parallel nach oben verlaufenden Stangenabschnitten (1.1.2, 1.1.3; 1.1.2', 1.1.3') einen Schlitz (2.1.1) zur Aufnahme eines Pedalzapfens eines Fahrradpedal (2) aufweist.

2. Fahrzeug nach Anspruch 1, **dadurch gekennzeichnet, dass** eine Mündung des Schlitzes (2.1.1) nach oben weist, wobei ein oberer Abschnitt des Schlitzes (2.1.1) zur Aufnahme von Pedalzapfen von Fahrrädern mit hoher Pedalhöhe ausgestaltet ist und ein unterer Abschnitt des Schlitzes (2.1.1) zur Aufnahme von Pedalzapfen von Fahrrädern mit niedriger Pedalhöhe.

3. Fahrzeug nach Anspruch 2 oder 3, **dadurch gekennzeichnet, dass** der Innenausstattungsgegenstand und/oder die Pedalaufnahme (2) und/oder die Pedalzapfenhalterung (2.1) Führungselemente (3) zur Führung und/oder Sicherung des Pedalkörpers eines Fahrradpedals aufweist/aufweisen.

4. Fahrzeug nach einem der Ansprüche 1 bis 4, **dadurch gekennzeichnet, dass** die Pedalaufnahme (2) in einer für Fahrradpedale am höchstmöglichen Punkt einer Tretkurbel üblichen Höhe angeordnet ist.

5. Fahrzeug nach einem der Ansprüche 1 bis 5, **dadurch gekennzeichnet, dass** die Pedalaufnahme (2) an ihrem unteren und/oder oberen Ende von einer Aufgabelung der Haltestange (1) begrenzt ist.

6. Fahrzeug nach einem der Ansprüche 1 bis 6, **dadurch gekennzeichnet, dass** sich die Haltestange (1) in einem unteren, dem Boden oder einer Seitenwand des Fahrzeuges zugerichteten Bereich in die parallel verlaufenden Stangenabschnitte (1.1.2, 1.1.3) aufgabelt und sich unter Ausbildung des Halterabschnitts (1.1) mit der Pedalaufnahme (2) nach oben in Richtung Fahrzeugdecke oder in Richtung einer Seitenwand des Fahrzeuges erstreckt.

7. Fahrzeug nach Anspruch 6, **dadurch gekennzeichnet, dass** sich die beiden parallel verlaufenden Stangenabschnitte (1.1.2, 1.1.3) bis zu einer Höhe von etwa 60 oder 80 cm erstrecken.

8. Fahrzeug nach einem der Ansprüche 1 bis 7, **dadurch gekennzeichnet, dass** der Innenausstattungsgegenstand eine Haltestange (1) aufweist, die zumindest im Bereich eines Pedal-Halterabschnitts (1.1) mit einem elastischen und/oder weichen Material versehen ist.

## Claims

1. A vehicle used for public transportation, comprising an interior fitting article (1, 20, 21), the interior fitting article (1, 20, 21) comprises a pedal receptacle (2) for at least one bicycle pedal (11),
**characterized in that**
the interior fitting article (1, 20, 21) comprises a handrail (1; 1') for passengers, at which the pedal receptacle (2) is formed, and that, between two rail sections (1.1.2, 1.1.3; 1.1.2', 1.1.3') that extent vertically and parallel to one another, the pedal receptacle (2) includes a slot (2.1.1) for receiving a pedal spindle of a bicycle pedal (2).

2. The vehicle according to claim 1, **characterized in that** an opening of the slot (2.1.1) points upward, an upper section of the slot (2.1.1) being configured to receive pedal spindles of bicycles having a large pedal height, and a lower section of the slot (2.1.1) being configured to receive pedal spindles of bicycles having a small pedal height.

3. The vehicle according to claim 2 or 3, **characterized in that** the interior fitting article and/or the pedal receptacle (2) and/or the pedal spindle support (2.1) comprise guide elements (3) for guiding and/or securing the pedal body of a bicycle pedal.

4. The vehicle according to any one of claims 1 to 4, **characterized in that** the pedal receptacle (2) is arranged at a customary height for bicycle pedals at the highest possible point of a crank.

5. The vehicle according to any one of claims 1 to 5, **characterized in that** the pedal receptacle (2) is delimited at the lower end and/or upper end thereof by a bifurcation of the handrail (1).

6. The vehicle according to any one of claims 1 to 6, **characterized in that** the handrail (1), in a lower region oriented toward the bottom or a side wall of the vehicle, is bifurcated into the parallel extending rail sections (1.1.2, 1.1.3) and extends with the pedal receptacle (2) upward in the direction of the vehicle ceiling, or in the direction of a side wall of the vehicle, forming the receptacle section (1.1).

7. The vehicle according to claim 6, **characterized in that** the two parallel extending rail sections (1.1.2, 1.1.3) extend up to a height of approximately 60 or 80 cm.

8. The vehicle according to any one of claims 1 to 7, **characterized in that** the interior fitting article comprises a handrail (1), which is provided with an elastic and/or soft material at least in the region of a pedal receptacle section (1.1).

## Revendications

1. Véhicule de transport public avec un objet d'équipement intérieur (1, 20, 21), dans lequel l'objet d'équipement intérieur (1, 20, 21) présente un logement de pédale (2) pour au moins une pédale de bicyclette (11),
**caractérisé en ce**
**que** l'objet d'équipement intérieur (1, 20, 21) présente une barre de retenue (1 ; 1') pour des passagers, sur laquelle le logement de pédale (2) est réalisé, et que le logement de pédale (2) présente, entre deux parties de barre (1.1.2, 1.1.3 ; 1.1.2', 1.1.3') s'étendant parallèlement vers le haut, une fente (2.1.1) destinée à loger un tourillon de pédale d'une pédale de bicyclette (2) .

2. Véhicule selon la revendication 1, **caractérisé en ce qu'**une embouchure de la fente (2.1.1) est dirigée vers le haut, dans lequel une partie supérieure de la fente (2.1.1) destinée à loger des tourillons de pédale de bicyclettes est conçue avec une hauteur de pédale élevée et une partie inférieure de la fente (2.1.1) destinée à loger des tourillons de pédale de bicyclettes avec une hauteur de pédale basse.

3. Véhicule selon la revendication 2 ou 3, **caractérisé en ce que** l'objet d'équipement intérieur et/ou le logement de pédale (2) et/ou l'élément de retenue de tourillon de pédale (2.1) présente/présentent des éléments de guidage (3) destinés à guider et/ou bloquer le corps de pédale d'une pédale de bicyclette.

4. Véhicule selon l'une quelconque des revendications 1 à 4, **caractérisé en ce que** le logement de pédale (2) est disposé à une hauteur habituelle pour des pédales de bicyclette au point le plus haut possible d'un pédalier.

5. Véhicule selon l'une quelconque des revendications 1 à 5, **caractérisé en ce que** le logement de pédale (2) est délimité à son extrémité inférieure et/ou supérieure par une ramification de la barre de retenue (1).

6. Véhicule selon l'une quelconque des revendications 1 à 6, **caractérisé en ce que** la barre de retenue (1) est ramifiée dans une zone inférieure orientée vers le sol ou une paroi latérale du véhicule en les parties de barre (1.1.2, 1.1.3) s'étendant parallèlement et s'étend vers le haut en direction du dessus du véhicule ou en direction d'une paroi latérale du véhicule avec formation de la partie de support (1.1) avec le logement de pédale (2) .

7. Véhicule selon la revendication 6, **caractérisé en ce que** les deux parties de barre (1.1.2, 1.1.3) s'étendant parallèlement s'étendent jusqu'à une hauteur d'environ 60 ou 80 cm.

8. Véhicule selon l'une quelconque des revendications 1 à 7, **caractérisé en ce que** l'objet d'équipement intérieur présente une barre de retenue (1) qui est pourvue au moins dans la zone d'une partie de support de pédale (1.1) d'un matériau élastique et/ou souple.
